# EUROPEAN PATENT SPECIFICATION

(11) **EP 1 860 589 B1**
(45) Date of publication and mention of the grant of the patent: **27.11.2013**
(21) Application number: 06010816.4
(22) Date of filing: 26.05.2006
(51) Int. Cl.: G06F 21/62

(54) **Method for accessing structured data in IC Cards**
Verfahren für den Zugriff auf strukturierte Daten einer IC-Karte
Procédé d'accès aux données structurées des cartes CI

(43) Date of publication of application: 28.11.2007
(73) Proprietor: Incard SA, 1204 Plan-Les-Ouates, Geneva (CH)
(72) Inventor: Massascusa, Sofia, 84091 Battipaglia (Salerno) (IT); Veneroso, Amedeo, 81100 Caserta (IT); Varone, Francesco, 81041 Bellona (Caserta) (IT); Tornese, Rosario, 84080 Pellezzano (Salerno) (IT)
(74) Representative: Botti, Mario

(56) References cited:
- WO-A-01/31843
- WO-A-98/19237
- US-A1- 2004 242 216
- US-B1- 6 950 819
- MACAIRE A ET AL: "A PERSONAL NAMING AND DIRECTORY SERVICE FOR UMTS USERS" April 1999 (1999-04), LECTURE NOTES IN COMPUTER SCIENCE, SPRINGER VERLAG, NEW YORK, NY, US, PAGE(S) 250-262 , XP000961507 ISSN: 0302-9743 * the whole document *

## Description

### Field of application

The present invention relates to a method for accessing structured data stored in a memory unit of an IC Card intended to be used in an electronic device.

More particularly, the present invention relates to a method wherein the structured data are directly acceded by the electronic device hosting the IC Card, an access to an external device being prevented for policy and for identification reasons between the electronic and the external device.

### Prior Art

As it is well known, an IC Card comprises at least a memory unit for storing a plurality of data; for example, an IC Card intended to be used in a telephone device such as a cellular phone generally comprises a memory unit for storing a phonebook.

The availability of a phonebook was introduced since the very beginning of the GSM technology and originally it included a plurality of entries comprising contact names and corresponding phone numbers.

The phonebook was easy to use but the only information associated to a contact name was the corresponding phone number.

Actually, a memory unit for an IC Card may store not only additional information associated to the phonebook but also one or more applications for managing such additional information.

These applications was improved by the new standard 3G technology, for instance by the 3GPP TS 31.102 specification, introducing a phonebook supporting email addresses and additional information, as well as the possibility to grouping together a plurality of contact names.

Even if these applications improved the capability and flexibility of the phonebook and data managing inside the IC Card, they are generally solutions designed specifically for telephone devices.

This limits the possibility to share information between the telephone device and external devices, for example a personal computer or a central server storing a plurality of address books, also limiting the possibility to updating such central storing on the base of data stored in peripherally telephone device.

It is also known that an external device, in communication with a telephone device that hosts an IC Card, may access the corresponding phonebook through specific applications, for example applications stored in the memory unit of the same IC Card.

However, such communication between the external device and the telephone device needs a specific driver that depend on hardware and/or software of the telephone device as well as on hardware and/or software of the external device.

Also, such communication may corrupt information stored inside the memory unit of the IC Card itself, for example damaging the phonebook.

Moreover, an access to data stored inside the IC card by the external devices impacts on the privacy of data and would require the introduction of security policies to allow or deny such access.

At the moment it is not known a specific driver interconnecting the external device and the telephone device, at the same time supporting security policies to access only a pre-defined portion of the structured data stored inside the IC Card, for example only a sub-set of the plurality of entry of the phonebook.

Moreover, it is not known a specific driver interconnecting the external device and the telephone device and supporting security policies to allow only a pre-defined user or group of user to access the IC Card of the telephone device.

For a better understanding of the present invention it worth while to note that a method for accessing, from an external device, structured data stored inside an IC Card of a telephone device would require a driver for a communication between the telephone device and the external device. However, such a driver would be dependent by hardware and software configurations of the telephone and external device, thus limiting the possibility to share information in a flexible way between a plurality of telephone devices and one or more external devices. Moreover, such a driver would not be able to support security policies to access only a defined portion of the structured data or to enable specific group of users to access such structured data.

US 2004/0242216 discloses a method for transferring data between devices including hardware and/or software located in the mobile stations. The methods display a menu to the user that allows the user to select data for transfer, the method of transfer, the device to transfer the data to or from, and the specific model of the selected device.

The problem at the basis of the present invention is that of providing a method to access, from an external device, structured data stored inside the memory unit of an IC Card for a telephone device, the method being easy to use and independent from the hardware or software of the telephone and external device, at the same time providing a security policy for managing the access of such structured data and enabling only specific group of users to such access.

### Summary of the invention

The above problem is solved, according to the present invention, by a method to access data stored in a first structured format inside a memory unit of an IC Card (11), said first structured format being readable by a first electronic device including said IC Card (11), said method comprising the phases of:
- storing an LDAP server inside said IC Card (11);
- the LDAP server mapping said first structured format into an LDAP structured format comprising a plurality of entries, said LDAP structured format being readable by an LDAP client;
- executing the LDAP server for serving at least a query of information about one or more of said plurality of entries, said query being sent by said LDAP client to a gateway (9) that forwards the LDAP query to the IC Card by means of BIP commands, said gateway (9) interfacing the LDAP client to the IC Card (11);
- defining an access control list for associating a list of LDAP clients to corresponding access rights to said plurality of entries;
- authenticating said LDAP client of said list of LDAP clients in said LDAP server via SSL or TLS protocol and serving the LDAP query only if said LDAP client in said access control list has access rights to access said plurality of entries.

The features and advantages of the invention will be apparent from the following description of an embodiment thereof, given by way of non-limitative example with reference to the accompanying drawings.

### Brief description of drawings

- Figure 1 schematically represents a Lightweight Directory Access Protocol (LDAP) data structure, according to the present invention.
- Figure 2a schematically represents an LDAP query required directly by an LDAP client to an LDAP server, according to the present invention.
- Figure 3 schematically represents an entry of a phonebook represented through an LDAP data structure, according to the present invention.
- Figure 4 schematically represents, in a major level of abstraction, the LDAP data structure of figure 3.
- Figure 5 schematically represents an LDAP query required by an LDAP client to an LDAP server included in an IC Card, according to the present invention.
- Figure 6 schematically represents, in major detail the LDAP query from the LDAP client to the LDAP server of figure 5, according to the present invention.
- Figure 7 schematically represents an LDAP query from a user to an LDAP server stored inside an IC Card, according to the present invention.
- Figure 8 schematically represents, in major detail, the LDAP query of figure 6, according to the present invention.
- Figure 9 schematically represents an LDAP query from an application stored inside an IC Card to an LDAP server stored inside the same IC Card, according to the present invention.
- Figure 10 schematically represents, in major detail, the LDAP query of figure 9, according to the present invention.
- Figure 11 schematically represents the synchronization between a phonebook stored in a first IC Card and a phonebook stored in a second IC Card, according to the present invention.

### Detailed description

With reference to the annexed drawing, a method to access data stored in a first structured format inside a memory unit of an IC Card is provided, such IC Card being intended to be used in a first electronic device, for example in a mobile handset.

More particularly, the first electronic device is able to read and/or write and/or modify data stored in the first structured format through a corresponding set of instructions.

According to the present invention, the method comprises a phase for mapping the data structured in the first format into a second structured format comprising a plurality of entries.

Advantageously, the second structured format is readable by a second electronic device that is unable to read data in the first structured format. For example, second structured format is readable by a personal computer unable to acces data stored inside an IC card of the mobile handset.

More particularly, the method according to the present invention provides a phase for serving a query of information from the second electronic device about one or more of said plurality of entries.

The method defines an access control list, associating a list of clients to corresponding access rights to said plurality of entries and providing detection means for allowing or not allowing a client to access the plurality of entries through the query of information.

The term user may be intended in its more general meaning: a human user, a terminal user like a client or a virtual user, for example an application intended to access data in the second structured format. More generally, hereinafter the term client is used to indicate a generic user.

According to the method of the invention, the query of information of the client is served only if the access rights of the client allow to access the plurality of entries.

More particularly, the method provides the storing of an applicationinside the memory unit of the IC Card, such application being in charge of mapping data structured in the first structured format into the second structured format.

Advantageously, a second structured format for supporting security policy may be provided. For example the second structured format may be a tree structure wherein said plurality of entries represent corresponding nodes, including one or more attributes.

The application stored in the IC Card serves the query of information only if the client is listed in said access control list with adequate access rights to access one ore more values of said attributes.

More particularly, the query of information may be executed by a device external to said electronic device, for example by a Lightweight Directory Access Protocol (LDAP) client, by a user or by an application internal to the electronic device.

To manage the level access of applications internal to the electronic devices, the access control list stores at least a virtual client representing such internal application. So, the internal application may access the plurality of entries only if the at least one virtual client in the access control list is allowed to access such plurality of entries.

According to the method of the present invention, the detection means comprises a gateway external to the electronic device comprising authentication means to authenticate a client and to associate him to a correspondent Client Identification CID.

The Client Identification CID is stored both inside a memory unit of the gateway and inside the access control list of the IC Card.

Advantageously, the method for accessing structured data stored inside an IC Card of a telephone device from a second electronic device, for example a second device external to the first one, is implemented through a Lightweight Directory Access Protocol or LDAP.

More particularly, this protocol LDAP is based on a client/sever model: a client LDAP sends a query to a server LDAP that access to a directory database and returns to the client LDAP a set of values.

The directory database stores a plurality of entries, each entry comprising an identifier like a distinguished name DN with a plurality of attributes. More particularly, each attribute is associated to a type, for example a first attribute may be of type "common name" cn and a second attribute may be of type "e-mail address".

Each attribute comprises also one or more values, for example the first attribute "common name" may comprise the value "Roberto" and the second attribute "e-mail address" the values "roberto@jobmail.com, roberto@homemail.com".

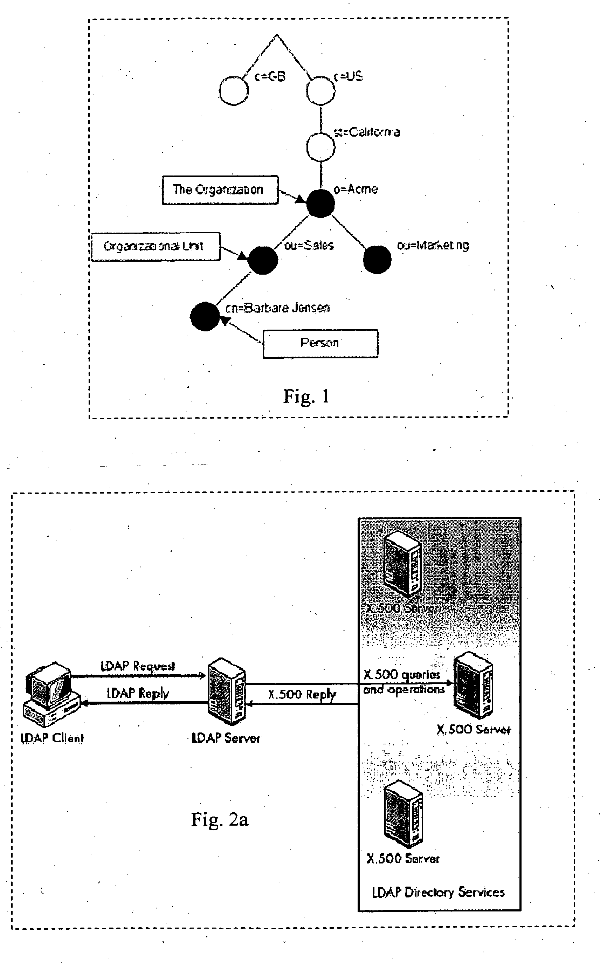

More generally, a directory database is structured as hierarchical tree of entries. In figure 1 is schematically shown an LDAP directory database tree structure, comprising a root entry representing a country, US. Under the root entry US, a national entry California is represented while under the national entry California, respectively, an organization entry, an organization unit entry and a person entry are linked to each other.

The person entry may for example comprise the attributes described above, a common name and a e-mail address with corresponding values.

As schematically represented in figure 2a a client LDAP sends a request to a server LDAP that access to a directory database and returns to the client LDAP a set of values through an LDAP reply. More particularly, the LDAP server may directly store the directory database comprising the required data or it may request data to a set of additional server that stores such directory database.

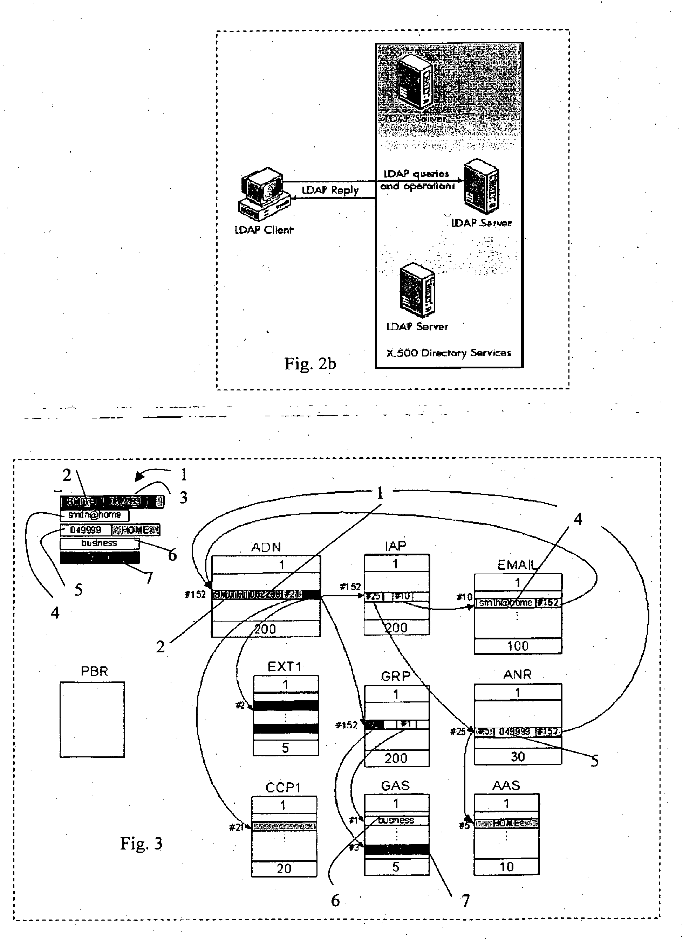

In figure 2b an LDAP client executes a query to an LDAP server and directly receives from the LDAP server a reply, comprising the requested data.

Differently, in figure 2a the LDAP client executes a query to an LDAP server but does not directly receive a reply form the LDAP server. In fact a set of additional servers, for example X.500 servers, stores the required data while the LDAP server functions like a gateway between the LDAP client and additional servers.

Advantageously, a phonebook intended to be stored in an IC Card of a telephone device may be represented through an LDAP data structure.

According to the present invention, the IC card of a telephone device comprises an LDAP server intended to serve the requests of a plurality of LDAP clients.

More particularly, the phonebook stored in the memory unit of the IC Card may be stored in a file structure as commonly defined by telecom standard, for example GSM or 3GPP.

The method according to the invention provides to map such commonly defined file structure into an LDAP data structure, substantially working as an LDAP server.

The LDAP server defines not only the data structure or directory database structure but also the service to access and update such data structure, for example methods to add or update an entry, for changing its common name or searching an information inside the directory database.

Advantageously, the LDAP comprises also methods to authenticate the identity of an LDAP client, before allowing it to access information in data structure, supporting security privacy and an integrity of information.

The method for accessing the phonebook of an IC Card according to the present invention may for example be implemented with reference to an LDAP protocol specified by the IETF group, in standard RFC 1777 and RFC 2251.

This LDAP protocols, comprises security features that may be easily adapted to the IC Card security policy requirements, more particularly to allow an external device to access data stored inside the IC Card depending on a predefined access control.

As explained above, the contact name in the phonebook is designed as LDAP entry with attributes indicating the information related to a specific person, for example his name, phone number, email address and home address. The LDAP entries may also be grouped to easy organize information in user defined groups, for example a "friend" group, "family" group and "work" group.

For example, with reference to figure 3, it is schematically represented a phonebook according to the 3GPP standard and intended to be stored inside a memory unit of an IC Card. More particularly, with 1 an entry of the phonebook according to a standard record structure is indicated, comprising a contact name 2, a personal telephone number 3, an e-mail address 4, a home telephone number 5, and two groups 6 and 7 to which the contact name is related.

In figure 3 is also represented the entry 1 in the corresponding LDAP data structure: the contact name 2 with the corresponding personal telephone number 3 is stored in a record, for example in record #152 of an ADN structure.

More particularly, the record #152 of the ADN structure also comprises a pointer to a IAP structure that allows to link the contact name 2 to a corresponding e-mail address 4, stored in a specific EMAIL structure, and to a corresponding home telephone number 5, stored in a specific ANR structure.

In other words, a record in a structure stores not only specific information but also one or more pointers to catch other records in related structures. For example the GRP structure comprises two pointers to a GAS structure that stores groups 6 and 7 related to a contact name.

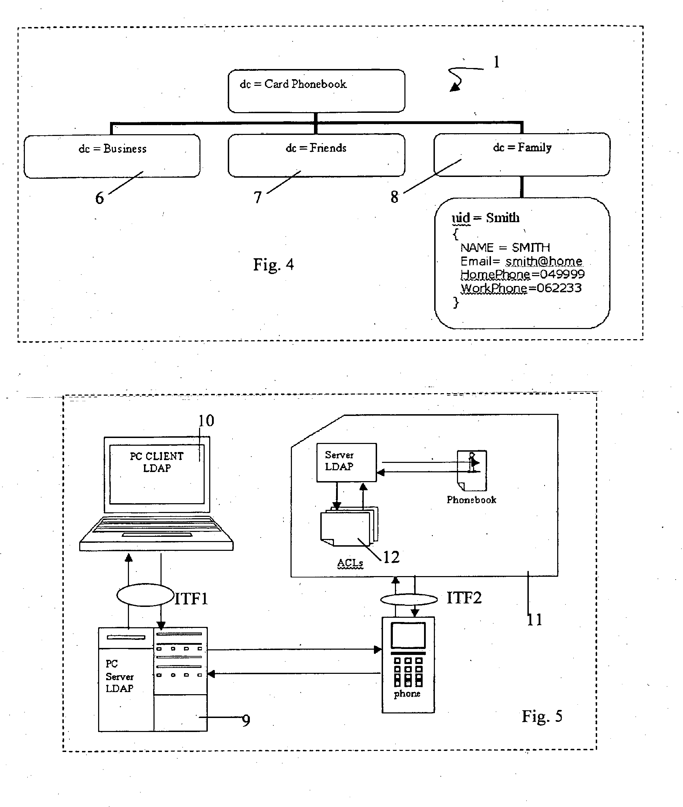

Figure 4 schematically represents the entry 1 of the phonebook, wherein a root element represents the IC Card phonebook, three sub-entries are linked to the root entry 1 and represent a business 6, friend 7 and family 8 groups, while a CID entry, linked to the sub-entries family 8, represents the client entry.

Advantageously, the method to access structured data according to the present invention, not only provides the LDAP data structure but also a connectivity for the IC Card, complying to LDAP client/server specification.

With reference to figure 5 a gateway 9 is introduced to interface an LDAP client 10 standard interface, ITF1, to an IC Card 11 interface ITF2. The interface ITF2 is provided by a server LDAP inside the IC card 11 that serves the requests coming from an second external device, for example by the LDAP client 10.

More particularly, an LDAP query is sent by the client LDAP 10 to the gateway 9 that forwards the LDAP query to the IC Card 11 by means of standard communication protocols like SMS or BIP commands.

The LDAP query requires the fulfilling of a specific security policy that is indicated in an Access Control List or ACL 12 stored inside the IC Card 11. The ACL is a list of user identifiers CIDs wherein, for each CID, is indicated what action may perform on the LDAP data structure. In other words, any specific operation on an attribute of a certain entry of the LDAP directory database or data structure is associated to a proper ACL.

So, the LDAP server inside the IC card 11, before serving a request coming from a second external device or an LDAP client 10, check the identity of the external device 10 and serves the request only if such second external device 10 is allowed to execute the request.

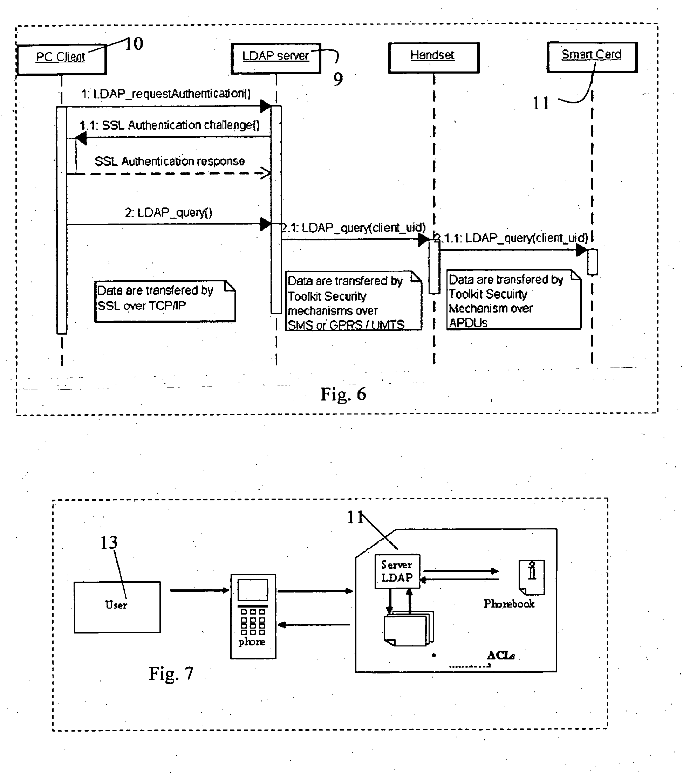

In figure 6 an LDAP query from the client 10 to the IC Card 11 is schematically represented: the client 10 performs an authentication request to the gateway 9. Before the execution of the LDAP query, the LDAP client 10 is authenticated by the gateway 9, for example through SSL that is a known security protocol.

If the LDAP client 10 is authenticated by the gateway, the LDAP query is transferred, for example through TCP/IP protocol, to the gateway 9 wherefrom it is forwarded to the IC Card 11, for example through SMS, GPRS or UMTS protocol.

In this way, the method according to the present invention allows to implement a security policy for the IC Card 10 phonebook or data structure, through a gateway 9 that is in charge of authenticating an LDAP client and an LDAP server that serves such LDAP client depending on the rights defined in the ACL.

Advantageously, such authentication do not requires the storing of digital certificates inside the memory unit of the IC card because they are already stored and implemented by the gataway 9.

Advantageously, the LDAP server inside the IC Card 11 authenticates and grants rights to an LDAP client on the basis of a standard authentication protocol such as, but non limited to, SSL or TLS.

When the authentication process is completed, the gateway 9 uses the standard communication protocol with the IC Card 11 to notify the IC Card 11 about the authenticated client, for example through an ID that is unique for each client and is known both by the IC Card 11 and the gateway 9.

The IC Card uses such ID to address the proper ACL and subsequently granting the correct rights. The list of all the client IDs recognized by the LDAP server inside the IC Card is defined as the client list.

According to another example the LDAP server inside the IC Card 11 allows a client to access the IC Card 11 data structure also when the telephone device is not connected to the network and the gateway 9 is not reachable.

In this case, the LDAP query is sent by already known I/O protocols, like ISO 7816-3 protocol or ETSI TS 102 223 ENVELOPE data message.

With reference to figure 7, a client 13 represents a human user and access the phonebook stored on a IC Card 11 of a telephone device 14.

The operations on the phonebook required by the human user 13, trough an MMI interface of the handset, result in a LDAP query for the IC Card 11.

Also according to this second embodiment, the method for accessing data inside the IC Card provides a security policy.

More particularly, a specific client in the LDAP client list is defined as the User Equipment UE user. The UE may requires an authentication operation to identify a final human user, for example a PIN verification.

Once the IC Card verifies a correct PIN, the ACL inside the IC Card may grants operation to the UE user.

In other words, the LDAP server defines the allowed operations that may be sent by the User Equipment on the I/O line, replacing the authentication and identification described in a previous embodiment of the present invention, wherein a CID was provided by the gateway 9.

According to a further example, an LDAP server on memory unit of the IC Card 11 may also allow assess to an application stored on the memory unit of the same IC Card 11, for example a Javacard application.

In this case, the LDAP server grants operations through a specific virtual client that may be assigned to the application, for example at installation time.

Any operation performed by the applet and intended to access the LDAP data structure is granted if the same operation is granted to the virtual client associated to that application. In this case, the authentication and identification described in a previous embodiment of the present invention, wherein a CID was provided by the gateway 9, is replaced by the authentication and identification based on a virtual client associated to a specific application.

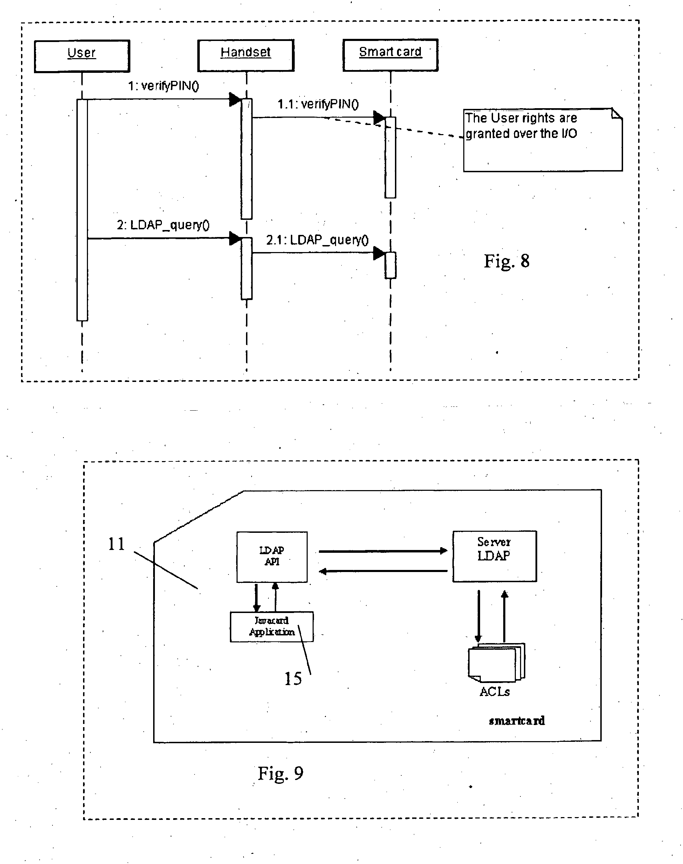

With reference to figure 9 the IC Card 11 stores a javacard application 15. Any operation performed by the javacard application is allowed if the same operation is granted to the virtual client associated to the javacard application.

Advantageously, according to the method of the present invention, the phonebook stored on a first memory unit of an IC Card 11 may be synchronized to an address book stored on a second memory unit of a second electronic device, for example by a device external to the first one.

Moreover, the method of the present invention may be used to synchronize the phonebooks between two different IC Cards, belonging to a same or different human users.

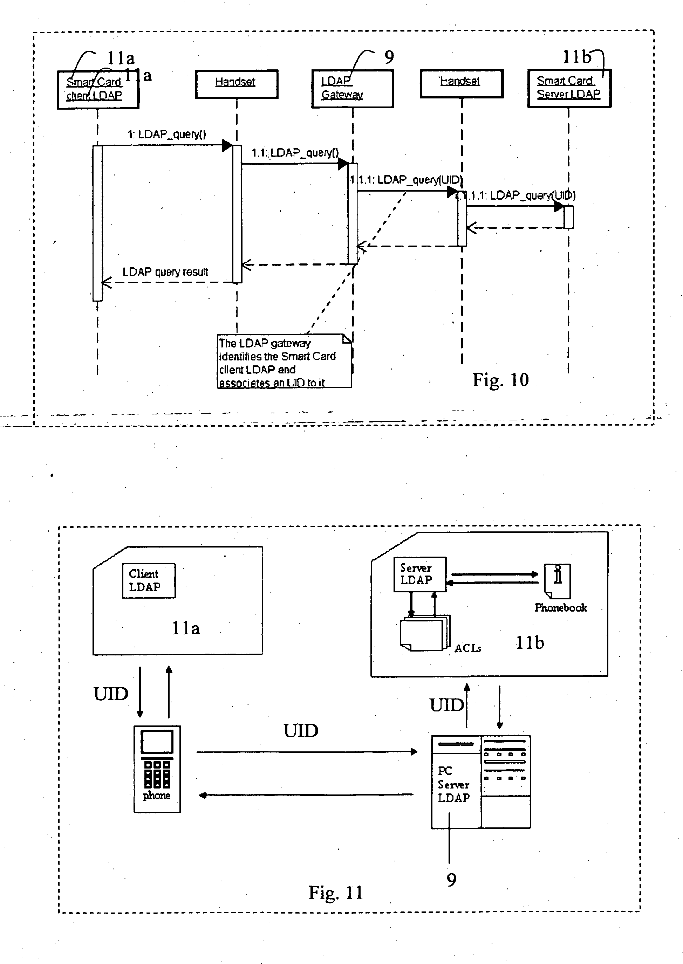

For example, with reference to figure 10 is represented a first IC card 11a that functions like an LDAP client and a second IC card 11b that is an LDAP server.

The IC Card 11a, to align its phonebook with the phonebook of the second IC Card 11b, sends a synchronization query to IC Card 11b; the query is sent by an handset to an gateway 9.

More particularly, the gateway 9 associates to the IC Card 11a an unique identifier CID; the query is forwarded to IC Card 11b specifying the CID. The IC Card 11b associates to the CID of the IC Card 11a to the proper ACL, granting to the IC Card 11a the corresponding access.

With reference to figure 11 are schematically shown the first IC Card 11a and the second IC Card 11b of figure 10 with particular reference to the association between the IC Card 11a and the corresponding CID.

Advantageously, the method for accessing structured data stored inside an IC Card of a telephone device from an external device does not require additional drivers for the communication between the telephone device and the external device.

The method is independent by hardware and/or software configurations of the telephone and external device.

The information between a plurality of telephone devices and one or more external devices, or between a plurality of telephone devices is flexible and it also support security policies to access only a defined portion of the structured data.

An access to an information stored in a IC Card may be driven by an access control list that rules, for each LDAP client intended to access such information, the corresponding rights.

In conclusion the following further advantages may be noted:
- LDAP protocol is easy to deploy on an IC Card, being a protocol originally designed to be light and non resource consuming;
- additional LDAP features, like replication and distribution functions, are used to improve and enhance service on phonebook inside the memory unit of the IC Card;
- the method according to the invention access a phonebook in a memory unit of an IC Card in a compatible way with respect to existing phonebook file structure, since it is possible to keep the same file structure for the phonebook as defined in current telecom standard, like GSM or 3GPP, the LDAP server on the IC Card providing an LDAP standard interface to the file structure.

## Claims

1. Method to access data stored in a first structured format inside a memory unit of an IC Card (11), said first structured format being readable by a first electronic device including said IC Card (11), said method comprising the phases of:
- storing an LDAP server inside said IC Card (11);
- the LDAP server mapping said first structured format into an LDAP structured format comprising a plurality of entries, said LDAP structured format being readable by an LDAP client;
- executing the LDAP server for serving at least a query of information about one or more of said plurality of entries, said query being sent by said LDAP client to a gateway (9) that forwards the LDAP query to the IC Card by means of BIP commands, said gateway (9) interfacing the LDAP client to the IC Card (11);
- defining an access control list for associating a list of LDAP clients to corresponding access rights to said plurality of entries;
- authenticating said LDAP client of said list of LDAP clients in said LDAP server via SSL or TLS protocol and serving the LDAP query only if said LDAP client in said access control list has access rights to access said plurality of entries.

2. Method according to claim 1 **characterized by** the fact that an entry of said plurality of entries comprises one or more attributes.

3. Method according to claim 2 **characterized by** the fact that said LDAP server serves said query of information only if said LDAP client in said access control list has access rights to access one ore more values of said attributes.

4. Method according to claim 3 **characterized by** the fact that said gateway comprises authentication means to authenticate said LDAP client and to associate it to a correspondent Client Identification CID.

5. Method according to claim 4 **characterized by** the fact that said Client Identification CID is stored inside said access control list.

6. Method according to claim 5 **characterized by** the fact that said authentication means authenticate said user through a security protocol.

## Patentansprüche

1. Verfahren zum Zugreifen auf Daten, die in einem ersten strukturierten Format in einer Speichereinheit einer IC-Karte (11) gespeichert sind, wobei das erste strukturierte Format von einem ersten elektronischen Gerät lesbar ist, welches die IC-Karte (11) enthält, wobei das Verfahren die folgenden Phasen aufweist:
- Vorhalten eines LDAP-Servers (lightweight directory access protocol, Ressourcen-schonendes Verzeichnis-Zugriff-Protokoll) in der IC-Karte (11);
- Abbilden des ersten strukturierten Formats in ein LDAP-strukturiertes Format mit einer Mehrzahl von Einträgen durch den LDAP-Server, wobei das LDAP-strukturierte Format von einem LDAP-Client lesbar ist;
- Ausführen des LDAP-Servers zum Bedienen mindestens einer Informationsanfrage bezüglich einem oder mehreren der Mehrzahl von Einträgen, wobei die Anfrage von dem LDAP-Client an einen Netzkoppler (9) gesendet wird, welcher die LDAP-Anfrage an die IC-Karte mittels BIP-Befehlen weiterleitet, wobei der Netzkoppler (9) eine Schnittstelle zwischen dem LDAP-Client und der IC-Karte (11) bildet;
- Definieren einer Zugriffskontrollliste zum Verkntipfen einer Liste von LDAP-Clients mit entsprechenden Zugangsrechten zu der Mehrzahl von Einträgen;
- Authentifizieren des LDAP-Clients der Liste von LDAP-Clients in dem LDAP-Server mittels SSL- oder TLS-Protokoll und Bedienen der LDAP-Anfrage nur, wenn der LDAP-Client in der Zugriffskontrollliste Zugriffsrechte hat, um auf die Mehrzahl von Einträgen zuzugreifen.

2. Verfahren nach Anspruch 1, **gekennzeichnet durch** die Tatsache, dass ein Eintrag der Mehrzahl von Einträgen ein oder mehrere Attribute aufweist.

3. Verfahren nach Anspruch 2, **gekennzeichnet durch** die Tatsache, dass der LDAP-Server die Informationsanfrage nur bedient, wenn der LDAP-Client in der Zugriffskontrollliste Zugriffsrechte hat, um auf einen oder mehrere Werte der Attribute zuzugreifen.

4. Verfahren nach Anspruch 3, **gekennzeichnet durch** die Tatsache, dass der Netzkoppler Authentifizierungsmittel aufweist, um den LDAP-Client zu authentifizieren und ihn mit einer entsprechenden Client-Identifizierung CID in Verbindung zu bringen.

5. Verfahren nach Anspruch 4, **gekennzeichnet durch** die Tatsache, dass die Client-Identifizierung CID in der Zugriffskontrollliste gespeichert ist.

6. Verfahren nach Anspruch 5, **gekennzeichnet durch** die Tatsache, dass die Authentifizierungsmittel den Benutzer **durch** ein Sicherheitsprotokoll authentifizieren.

## Revendications

1. Procédé d'accès à des données mémorisées sous un premier format structuré à l'intérieur d'une unité de mémoire d'une carte de CI (11), ledit premier format structuré étant lisible par un premier dispositif électronique incluant ladite carte de CI (11), ledit procédé comprenant les phases suivantes :
- mémorisation d'un serveur LDAP à l'intérieur de ladite carte de CI (11) ;
- mappage par le serveur LDAP dudit premier format structuré sous un format structuré LDAP comprenant une pluralité d'entrées, ledit format structuré LDAP étant lisible par un client LDAP ;
- exécution du serveur LDAP pour qu'il prenne en charge au moins une demande d'information concernant une ou plusieurs de ladite pluralité d'entrées, ladite demande étant envoyée par ledit client LDAP à une passerelle (9) qui transmet la demande LDAP à la carte de CI au moyen de commandes BIP, ladite passerelle (9) servant d'interface entre le client LDAP et la carte de CI (11) ;
- définition d'une liste de contrôle d'accès pour associer une liste de clients LDAP à des droits correspondants d'accès à ladite pluralité d'entrées ;
- authentification dudit client LDAP de ladite liste de clients LDAP dans ledit serveur LDAP via le protocole SSL ou TLS et prise en en charge de la demande LDAP uniquement si ledit client LDAP de ladite liste de contrôle d'accès possède des droits d'accès pour accéder à ladite pluralité d'entrées.

2. Procédé selon la revendication 1, **caractérisé par le fait qu'**une entrée de ladite pluralité d'entrées comprend un ou plusieurs attributs.

3. Procédé selon la revendication 2, **caractérisé par le fait que** ledit serveur LDAP prend en charge ladite demande d'information uniquement si ledit client LDAP de ladite liste de contrôle d'accès possède des droits d'accès pour accéder à une ou plusieurs valeurs desdits attributs.

4. Procédé selon la revendication 3, **caractérisé par le fait que** ladite passerelle comprend des moyens d'authentification pour authentifier ledit client LDAP et l'associer à une identification de client CID correspondante.

5. Procédé selon la revendication 4, **caractérisé par le fait que** ladite identification de client CID est mémorisée à l'intérieur de ladite liste de contrôle d'accès.

6. Procédé selon la revendication 5, **caractérisé par le fait que** lesdits moyens d'authentification authentifient ledit utilisateur par l'intermédiaire d'un protocole de sécurité.
